# EUROPEAN PATENT APPLICATION

(11) **EP 2 090 447 A2**
(43) Date of publication of application: **19.08.2009**
(21) Application number: 09152795.2
(22) Date of filing: 13.02.2009
(51) Int. Cl.: B60H 1/00

(54) **System for Preventing Overheating in a Vehicle Interior**

(30) Priority: 13.02.2008 US 30506
(71) Applicant: Friedman, Kerry C., Lake Forest IL 60045 (US)
(72) Inventor: Friedman, Kerry C., Lake Forest IL 60045 (US)
(74) Representative: Makovski, Priscilla Mary

(57) **Abstract**

A system (200) senses the presence of a vehicle occupant and takes remedial action so as to prevent overheating of an occupant (140) of the vehicle (100). The system comprises a presence sensor (130), a temperature sensor (220), and a control module (210). The presence sensor (130) provides information relating to the presence of an occupant in the vehicle and the temperature sensor (220) measures an interior temperature of the vehicle. The control module (210) receives temperature measurements from the temperature sensor (220), and the information from the presence sensor (130), and forms a temperature comparison by comparing the information from the presence sensor with predetermined criteria. The control module (210) then forms a determination whether to operate a cooling mechanism of the vehicle (100) so as to reduce the interior temperature. The determination is based on the temperature comparison and the information from the presence sensor, and the control module operates the cooling mechanism based on the determination. The cooling mechanism may be a ventilation system or the vehicle windows (120).

## Description

### BACKGROUND OF THE INVENTION

Vehicles such as cars, automobiles, and sport utility vehicles (S.U.V.'s) all share a common characteristic in that their interiors heat up drastically when the vehicles are exposed to the sun. In particular, the greenhouse effect can cause the interior of a vehicle to reach temperatures much above that of the surrounding air. Consequently, the interiors of vehicles can reach levels unsafe for adults, children, dogs, cats, and other living beings.

There are several ways of taking remedial action in order to keep the interior of a vehicle at a safe temperature. For example, opening one or more car windows allows heated air to escape and be replaced by atmospheric air so as to maintain the vehicle interior at a temperature near ambient. A vehicle's air conditioning system can be utilized to cool the interior air of the vehicle. Other systems can also be employed. For instance, one can utilize fans and vents in a vehicle to exchange interior air with cooler atmospheric air. Placing shades in one or more windows can block the sun's radiation, thereby slowing the process at which the sun heats the vehicle interior. In general, any method of cooling air or preventing the sun's radiation can be used as a remedial measure to prevent the interior of a vehicle from reaching an unsafe temperature.

Remedial measures, however, are usually taken by a person inside the vehicle, such as an operator of the vehicle, who is present and able to operate various controls for lowering windows, operating the air conditioner, and the like. Often occupants can be trapped in a vehicle being heated by the sun because, for example, the occupants are small children or animals who have neither the ability nor the knowledge necessary for causing the interior of the vehicle to become cooler. For instance, a person may leave a dog in a vehicle while he or she shops in a store. If the weather is mild, the person may slightly open a window of the vehicle in order to provide a minimal level of necessary ventilation to the dog. If the weather changes abruptly while the person is in the store, the interior of the vehicle may reach unsafe temperatures unbeknownst to the operator. In other instances, a person may simply forget that a dog or child is in the back seat of the vehicle when he or she leaves the vehicle for a period of time.

### BRIEF SUMMARY OF THE INVENTION

In accordance with an embodiment, a system for sensing the presence of a vehicle occupant and taking remedial action is provided. The system includes a presence sensor, a temperature sensor, and a control module. The presence sensor provides information relating to the presence of an occupant in the vehicle and the temperature sensor measures an interior temperature of the vehicle. The control module receives temperature measurements from the temperature sensor, receives the information from the presence sensor, forms a temperature comparison by comparing the information from the presence sensor with predetermined criteria, forms a determination whether to operate a cooling mechanism of the vehicle so as to reduce the interior temperature, and operates the cooling mechanism based on the determination.

In accordance with another embodiment, a method of sensing the presence of a vehicle occupant and taking remedial action is provided. The method includes operating a presence sensor for detecting the presence of an occupant inside the vehicle, receiving information from the presence sensor and comparing the information to predetermined criteria to determine the presence of an occupant inside the vehicle, operating a temperature sensor to measure an interior temperature of the vehicle, receiving the interior temperature from the temperature sensor, forming a temperature comparison by comparing the interior temperature with a predetermined value, forming a determination whether to operate a cooling mechanism of the vehicle so as to reduce the interior temperature, the determination based on the temperature comparison, and operating the cooling mechanism based on the determination.

In accordance with yet another embodiment, a system for sensing the presence of a vehicle occupant and taking remedial action is provided. The system includes a presence sensing module, a temperature module, and a remedial action module. The presence sensing module comprises one or more presence sensors for providing presence information relating to the presence of an occupant in the vehicle, the presence sensing module for comparing the information with predetermined criteria so as to form a decision whether an occupant is present in the vehicle. The temperature module comprises one or more temperature sensors for providing an interior temperature measurement of the vehicle. The remedial action module for forms a determination whether to operate a cooling mechanism of the vehicle so as to reduce the interior temperature, the determination based on the decision and the internal temperature measurement.

### BRIEF DESCRIPTION OF THE SEVERAL VIEWS OF THE DRAWING(S)

Figure 1 is a partial view of the interior of the vehicle in accordance with an embodiment;

Figure 2 is a diagram of a system for preventing overheating in the vehicle of Figure 1;

Figure 3 is a diagram of a presence sensor of the system of Figure 2;

Figure 4 is a flow chart representing a method employed by the system of Figure 2; and

Figure 5 shows a flow chart representing a method for sensing the presence of an occupant of the vehicle of Figure 1.

### DETAILED DESCRIPTION OF THE INVENTION

In the following description, various embodiments of the present invention will be described. For purposes of explanation, specific configurations and details are set forth in order to provide a thorough understanding of the embodiments. However, it will also be apparent to one skilled in the art that the present invention may be practiced without the specific details. Furthermore, well-known features may be omitted or simplified in order not to obscure the embodiment being described. In addition, to the extent that orientations of the embodiments are described, such as "top," "bottom," "front," "rear," "right," and the like, the orientations are to aid the reader in understanding the embodiment being described, and are not meant to be limiting.

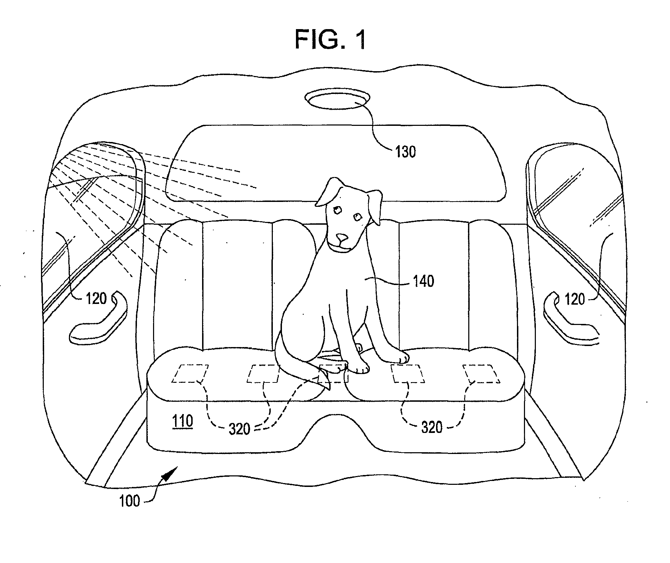

Referring now to the drawings, in which like reference numerals represent like parts throughout the several views, Figure 1 shows the rear interior portion of a vehicle 100. The vehicle 100 has features common to vehicles such as doors, seats, such as the back seat 110, windows 120, and other features. The windows 120 are controlled electronically so that operation of a switch either raises or lowers each window 120. In an embodiment, the vehicle 100 includes a presence sensor 130, described more fully below, for detecting the presence of an occupant of the vehicle such as a dog 140, a person, child, or other living being.

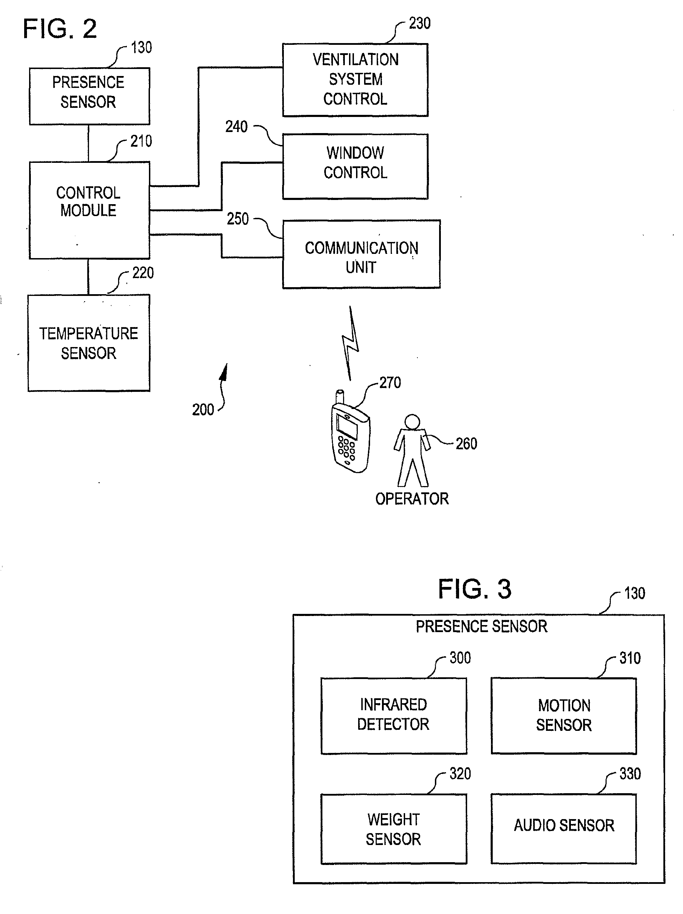

Referring to Figure 2, a system 200 for preventing overheating of the vehicle 100 is shown. In an embodiment, the system 200 includes a control module 210 for communicating with and controlling the various other mechanisms of the system 200. In an embodiment, the control module 210 is a computer or other electronic device that communicates with the presence sensor 130 and a temperature sensor 220, both described more fully below. Based on information received from the presence sensor 130 and the temperature sensor 220, the control module 210 operates various cooling mechanisms of the vehicle 100, such as a ventilation system control which controls the flow of air in and out of the vehicle 100, a window control 240, which controls the position of each window 120, and a communication unit 250 which may remotely alert an operator 260 of any remedial action taken by the control module 210. In an embodiment, the window control closes a circuit including a power source and a motor for lowering and raising the window, as determined by the control module 210. The communication unit 250 sends an alert to a mobile telephone 270 of the operator 260 in the event that the control module 210 operates the ventilation system control 230 or the window control 240.

Figure 3 shows the presence sensor 130 in more detail. In an embodiment, the presence sensor 130 includes an infrared detector 300, which is capable of measuring the temperature of various objects inside the vehicle 100. The infrared detector 300 can be any device capable of performing infrared thermography, or in general, any device that divides an area into sub-areas and measures the temperature of each area by measuring the frequency of infrared light emitted from each area or by measuring temperature using any other method. In an alternate embodiment, a remote thermal measuring device, such as those commonly found in thermometer guns, is used in various places throughout the vehicle 100, such as one remote thermal measuring device focused on each seat in the vehicle 100.

The presence sensor 130 in an embodiment also includes a motion sensor 310. In an embodiment, the motion sensor 310 is a pyroelectric sensor, any sensor commonly found in motion sensing lights, or any device capable of detecting motion. In addition, in an embodiment, the presence sensor 130 also includes a plurality of weight sensors 320 which are embedded in the seat 110 of the vehicle 100 and electrically connected to other parts of the presence sensor 310 via electrical wires concealed throughout the frame and paneling of the vehicle 100. Each weight sensor 320, is a strain gauge, such as a strain gauge commonly found in digital bathroom scales. However, any device capable of determining whether a weight is applied, such as common push button switches oriented in the seats with the buttons oriented upward, is suitable for use with the presence sensor 130. In an embodiment, the presence sensor 130 also includes an audio sensor 330 which is a microphone or any device capable of converting any noise inside the vehicle 100 into an electronic signal.

In accordance with an embodiment, the infrared detector 300, motion sensor 310, and audio sensor 330 are located together in a single unit mounted on the ceiling of the interior of the vehicle 100 and the weight sensors 320 are wired to the single unit, although various components of the presence sensor 130 need not be part of a single unit, but can be positioned in various places throughout the vehicle 100.

Other sensors and detectors in addition to or in alternative to the sensors and detectors listed above can be utilized in the system 200. For instance, in an embodiment, temperature sensors can be embedded in the seats of the vehicle 100 so as to sense heat from a person or animal sitting or lying on the seat 110. In alternate embodiments, subsets of the sensors and detectors listed above are used with the system 200 and as little as one sensor or detector can be used with the system 200. In an embodiment, the presence sensor 130 is part of a presence sensing module which is a device that receives data from various sensors and detectors, such as those described above, and compares that data with predetermined criteria in order to make a decision whether an occupant is in the vehicle 100. In this embodiment, the control module 210 receives the decision from the presence sensor 130. In an alternate embodiment, the presence sensor 130 relays the data from the various sensors and detectors, such as those described above, to the control module 210 which compares the data with predetermined criteria in order to make a decision whether an occupant is in the vehicle 100.

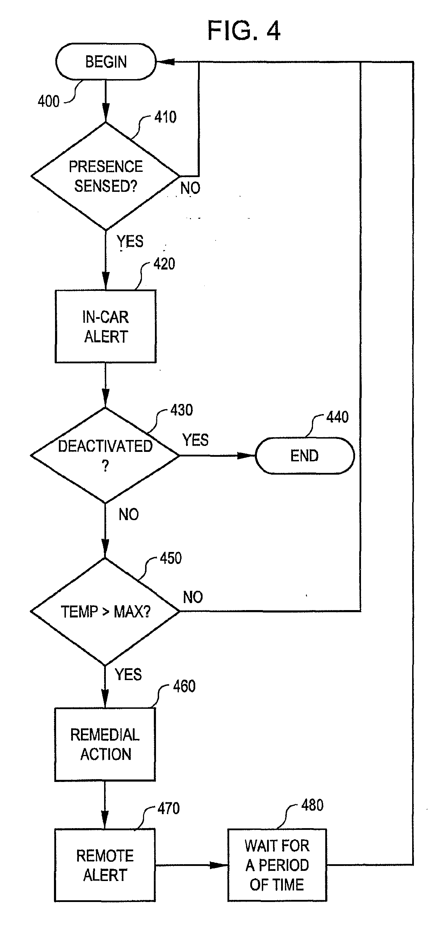

Figure 4 shows the operation of the system 200 in accordance with an embodiment. The system 200 begins its operation at step 400 which occurs when certain criteria are met. For instance, in an embodiment, the system 200 begins operation when the engine of the vehicle 100 has been shut off and a time period of two minutes has passed. Alternatively, the system 200 begins operation when a key for the vehicle 100 is removed from the vehicle 100, the driver-side door has closed, and a period of two minutes has been passed. Generally, the system 200 can begin operation at any point of time after criteria are met that indicate that operation of the vehicle 100 has temporarily paused. Alternatively, the system 200 operates continuously regardless of whether the vehicle 100 is being operated. Additional sensors can be utilized in the system 200 so as to determine whether the criteria have been met and the system 200 can be integrated with other systems of the vehicle 100.

Once the system 200 begins operation, the presence sensor 130 is operated at step 410 to determine whether a presence is sensed. If no presence is sensed, the system 200 returns to the beginning at step 400 and determines whether a presence is sensed again. In this manner, if a presence is not sensed in the vehicle 100, the system 200 cycles between steps 410 and 400, thereby periodically determining whether a presence has been sensed in the vehicle 100.

If at any time a presence has been sensed, the system 200, in an embodiment, produces an in-car alert at step 420. In an embodiment, the in-car alert comprises an audible signal in connection with illumination of a button near the steering wheel of the vehicle 100 so that the vehicle operator 260 may push the button to manually shut off the system 200. In an embodiment, the in-car alert comprises recorded instructions for the operator 260 to press the button to if he or she intends to remain in the vehicle 100 for an extended time without operating the vehicle 100. In this manner, the system 200 will not proceed further when a vehicle occupant is intentionally inside the vehicle 100 when the vehicle 100 is not being driven. For example, if the operator 260 of the vehicle 100 has parked the vehicle 100 and is sitting in the driver's seat waiting for someone, the system 200 senses the operator 260 at step 410 and, at step 420, alerts the operator that the system 200 is functioning so that the operator may manually shut off the system 200 by pressing the button. Other mechanisms and devices for producing an in-car alert and deactivating the system 200 can also be used.

Upon producing the in-car alert at step 420, the system at step 430 determines whether the system 200 has been deactivated by the operator 260. If at step 430 the system 200 determines that it has been deactivated, the system 200 ends at step 440, which in an embodiment comprises entering a stand-by mode until other criteria are met to indicate that the system 200 should begin at step 400 again. In an embodiment, the system 200 leaves stand-by mode after a period of time, such as ten minutes, has passed.

If at step 430, the system 200 determines that it has not been deactivated, the system 200 determines whether the interior temperature of the vehicle 100 is greater than a predetermined maximum. In an embodiment, the control model 130 receives temperature measurements from the temperature sensor 220, and compares the temperature measurements from the temperature sensor 220 with a predetermined value, such as 120° Fahrenheit or other temperature. In an embodiment, if the interior temperature is not greater than the predetermined maximum, the system 200 returns to the beginning at step 400.

If at step 450, the system 200 determines that the interior temperature is greater than the predetermined maximum, the control module 130 instructs the vehicle 100 to take remedial action at step 460. The determination whether to take remedial action at step 450, in an embodiment, is performed in a remedial action module, which is a computer, subsystem, or other device of the control module having instructions for making a determination whether to take remedial action. In an embodiment, remedial action includes instructing a window control to lower one or more of the windows 120 by applying a proper amount of power to one or more of the windows 120 for a predetermined period of time, such as five seconds. Remedial action can also or alternatively include operating an air conditioning system of the vehicle 100 or operating a fan and vents of the vehicle 100 so as to replace interior air of the vehicle 100 with cooler exterior air of the vehicle 100. In general, remedial action can include any action or combination of actions suitable for reducing the temperature of the interior of the vehicle 100. If necessary, the system 200, in an embodiment, operates the engine of the vehicle 100 so as to generate power from an alternator of the vehicle 100.

Once remedial action has been taken, the system 200 at step 470 produces a remote alert; however, the remote alert can be produced by the system 200 as early as step 450 or at a later step. In an embodiment, the remote alert 470 includes sending an alert to a cellular telephone 270 of the operator 260 to inform the operator 260 that remedial action has been taken. The remote alert 470 can also include digital photographs or video taken by a camera in the vehicle 100. In an embodiment, the vehicle 100 includes cellular functionality so that it dials the telephone number of the operator 260 of the mobile telephone 270 and sends a recorded message, or sends a text or other message to the telephone 270, or both. In an alternate embodiment, the system 200 produces the remote alert via a telematic unit such as the Onstar® system offered by General Motors. In yet another alternate embodiment, a remote alert is given before remedial action is taken so that the operator 260 can prevent remedial action before it happens either through the telephone 270 or other mobile device, by a remote key fob, by instructing an employee of a service offering telematic service, or by walking to the vehicle 100 and manually deactivating the system 200. Also, the remote alert may indicate to the operator 260 that a child or animal is in the vehicle 100 impossibly unsafe conditions so that the operator 260 can return to the vehicle to rescue the child or animal.

Once the remote alert has been given at step 470, the system pauses for a period of time, such as three minutes, at step 480, and subsequently returns to the beginning step 400. In this manner, time is given for the interior temperature of the vehicle 100 to fall according to the remedial action taken at step 460. In an embodiment, the system 200 records that remedial action has been taken and, if the system 200 proceeds to take remedial action at step 460, the system takes additional remedial action by, for example, further lowering one or more of the windows 120 lower or operating the air conditioner of the vehicle 100 for a longer period of time. In an embodiment where remedial action includes operating the air conditioner of the vehicle 100 or other power-operated device, the system 200 can use the temperature sensor 220 to monitor the internal temperature of the vehicle 100 and operate the air conditioner or other power-operated device continuously until the internal temperature reaches an acceptable level, such as 100 degrees Fahrenheit.

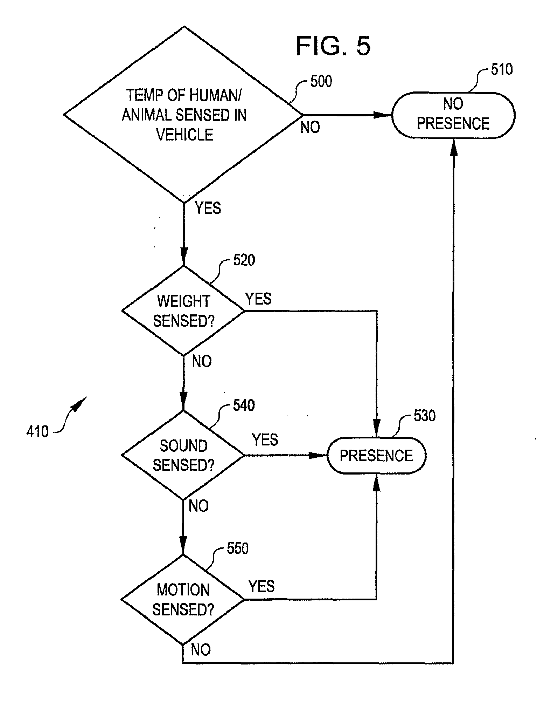

Figure 5 shows step 410 in greater detail in accordance with an embodiment. In an embodiment, the step 410 is performed in a presence sensing module, as described above, but it can be performed in the control module 210. At step 500, the infrared detector 300 determines whether an object in the vehicle 100 has a temperature approximately equal to the temperature of an animal, such as the dog 140, or human. For instance, in an embodiment the infrared detector 300 at step 500 determines whether an object in the vehicle 100 displays an external temperature between 95° and 102°. If no object in the car exhibits such a temperature, the system 200 at step 510 determines there is no presence of an occupant in the vehicle 100. If an object having a temperature of a human or animal is sensed in the vehicle 100, the system 200 proceeds to step 520 where it determines whether there is any weight on the seats of the car such as the seat 110. In an embodiment, if a weight is sensed on any of the seats 110, the system 200 proceeds to step 530 with a determination that there is a presence of an occupant inside the vehicle 100. If no weight is sensed, the system 200 proceeds to determine whether or not sound is sensed. For example, a microphone of the audio sensor 330 at step 540 indicates whether a baby is crying or a dog is barking in the vehicle 100. If sound is sensed in the vehicle 100, the system 200 proceeds to step 530 to determine that there is a presence of an occupant inside the vehicle 100. If no sound in the vehicle 100 is sensed at step 540, the system 200 proceeds to step 550 to determine whether motion is sensed. In an embodiment, at step 550 the motion sensor 310 determines whether or not an object is moving in the vehicle 100. For example, the dog 140 moving across the seat 110. If motion is sensed; the system 200 determines at step 530 that there is a presence of an occupant inside the vehicle 100. If not, the system 200 proceeds to step 510 to determine that there is not a presence of an occupant of the vehicle 100.

In this manner, the system must determine that an object in the vehicle has a temperature profile matching that of a human or animal in addition to sensing weight, sound, or motion. While the system 200, in an embodiment, can sense the presence of a vehicle occupant using only one of the infrared detector 300, motion sensor 310, weight sensor 320, and audio sensor 330, any combination of the sensors or detectors can be used. Additional sensors and detectors can also be used. Using multiple sensors, as in the embodiment described above, has the advantage of reducing the likelihood that the system 200 will falsely detect the presence of an occupant of the vehicle 100. For example, warm take-out food packaging may have a surface temperature of around 100 degrees Fahrenheit which, to an infrared detector, may be indistinguishable from a person or a dog. Therefore, including an additional requirement of motion, sound, or weight increases makes the determination of a presence inside the vehicle 100 more accurate. In addition, using multiple sensors, each measuring a different sensory characteristics, increases the chance that the system 200 will correctly identify that an occupant is inside the vehicle 100. For example, if a child is asleep on the back seat 110, the infrared detector and one of the weight sensors 320 would provide sufficient information to identify that the child is in the vehicle when the audio sensor 330 may not detect any sound while the child sleeps.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A system for sensing the presence of a vehicle occupant and taking remedial action, comprising:
a presence sensor for providing information relating to the presence of an occupant in the vehicle;
a temperature sensor for measuring and providing an interior temperature of the vehicle; and
a control module for receiving temperature measurements from the temperature sensor, receiving the information from the presence sensor, forming a temperature comparison by comparing the information from the presence sensor with predetermined criteria, forming a determination whether to operate a cooling mechanism of the vehicle so as to reduce the interior temperature, the determination based on the temperature comparison and the information from the presence sensor, and operating the cooling mechanism based on the determination.

2. The system of claim 1, wherein the presence sensor includes at least one of an infrared detector, a motion sensor, a weight sensor, a temperature sensor, and an audio sensor, and wherein the determination is based on information from at least two of the infrared detector, the motion sensor, the weight sensor, the temperature sensor, and the audio sensor.

3. The system of claim 1, the system further comprising a deactivation switch located in the vehicle, the deactivation switch for selectively preventing the control module from operating the cooling mechanism.

4. The system of claim 1, wherein the control module produces an alert inside the vehicle upon determining to operate the cooling mechanism, the alert for indicating to an occupant of the vehicle operation of the cooling mechanism based on the determination.

5. The system of claim 1, wherein the control module sends a remote alert upon determining to operate the cooling mechanism, the remote alert comprising information about the determination.

6. A method of sensing the presence of a vehicle occupant and taking remedial action, comprising:
operating a presence sensor for detecting the presence of an occupant inside the vehicle so as to form presence information;
comparing the presence information to predetermined criteria to determine the presence of an occupant inside the vehicle;
operating a temperature sensor to measure an interior temperature of the vehicle;
forming a temperature comparison by comparing the interior temperature with a predetermined value;
forming a determination whether to operate a cooling mechanism of the vehicle so as to reduce the interior temperature, the determination based on the temperature comparison and presence information; and operating the cooling mechanism based on the determination.

7. The method of claim 6, wherein the presence sensor includes at least one of an infrared detector, a motion sensor, a weight sensor, a temperature sensor, and an audio sensor, and wherein the determination is based on at least two of the infrared detector, the motion sensor, the weight sensor, the temperature sensor, and the audio sensor.

8. The method of claim 6, further comprising providing a choice to an occupant of the vehicle whether to prevent operation of the cooling mechanism based on the determination.

9. The method of claim 6, further comprising producing an alert inside the vehicle, the alert for indicating to an occupant of the vehicle operation of the cooling mechanism based on the determination.

10. The method of claim 6, further comprising sending a remote alert to an operator of the vehicle, the remote alert comprising information about the determination.

11. An apparatus for sensing the presence of a vehicle occupant and taking remedial action, comprising:
a presence sensing module comprising one or more presence sensors for providing presence information relating to the presence of an occupant in the vehicle, the presence sensing module for comparing the information with predetermined criteria so as to form a decision whether an occupant is present in the vehicle;
a temperature module comprising one or more temperature sensors for providing an interior temperature measurement of the vehicle; and
a remedial action module in communication with the presence sensing module and temperature module, the remedial action module for forming a determination whether to operate a cooling mechanism of the vehicle so as to reduce the interior temperature, the determination based on the decision and the internal temperature measurement.

12. The apparatus of claim 11, wherein the one or more presence sensors includes at least one of an infrared detector, a motion sensor, a weight sensor, a temperature sensor, and an audio sensor, and wherein the decision is based on information from at least two of the infrared detector, the motion sensor, the weight sensor, the temperature sensor, and the audio sensor.

13. The apparatus of claim 11, wherein forming a determination whether to operate a cooling mechanism of the vehicle includes determining whether to lower one or more windows of the vehicle or operate an air conditioner of the vehicle.

14. The apparatus of claim 11, further comprising a deactivation switch located in the vehicle and in communication with the remedial action module, the deactivation switch for manually changing the determination; and wherein the remedial action module produces an alert inside the vehicle upon forming the determination, the alert for indicating the determination to an occupant of the vehicle.

15. The apparatus of claim 11, wherein the remedial action module is further configured for sending a remote alert upon forming the determination, the remote alert comprising information about the determination.
